# EUROPÄISCHE PATENTANMELDUNG

(11) **EP 1 767 906 A2**
(43) Veröffentlichungstag der Anmeldung: **28.03.2007**
(21) Anmeldenummer: 06020099.5
(22) Anmeldetag: 26.09.2006
(51) Int. Cl.: G01D 5/347, F16D 1/08, F16D 1/092

(54) **Selbstzentrierende Nabe**

(30) Priorität: 26.09.2005 DE 102005046026
(71) Anmelder: PWB-Ruhlatec Industrieprodukte GmbH, 99846 Seebach (DE)
(72) Erfinder: Braun, Paul-Wilhelm, 53842 Troisdorf (DE)
(74) Vertreter: Müller-Wolff, Thomas

(57) **Zusammenfassung**

Die Erfindung betrifft eine selbstzentrierende Nabe für Taktscheiben von Encodern, Schrittmotoren, Druckwalzenantriebe und dergleichen umfassend einen Nabenteller zur Befestigung von Taktscheiben oder Codeträgern und einen geschlitzten Nabenschaft zum Aufstecken auf das Wellenende einer Antriebs- oder Abtriebseinheit. Der Nabenschaft (1, 2) ragt dabei formschlüssig in ein ringförmiges Klemmstück (4) hinein, wobei die Formschlüssigkeit zwischen Nabenaußenfläche und Innenwand des Klemmstück (4) derart ausgebildet ist, dass bei einer Relativbewegung entlang der Nabenachse (6) zwischen Nabe (1) und Klemmstück (4) über eine radial nach innen gerichtete Kraft im Bereich des geschlitzten Nabenschafts (1, 2) ein Klemmsitz ausgebildet ist. Das Klemmstück (4) ist in einem ringförmigen Klemmkörper (5) angeordnet, wobei Klemmstück (4) und Klemmkörper (5) form- und/oder kraftschlüssig derart verbunden sind, dass bei einer Drehung des Klemmkörpers (5) oder des Klemmstücks (4) eine Verschiebung parallel zur Nabenachse erfolgt. Auf dem Klemmkörper (5) ist eine Deckplatte (11) befestigt, auf der ein Ritzel (9) drehbar gelagert ist, das in eine Außenverzahnung des Klemmstücks (4) eingreift.

## Beschreibung

Die Erfindung betrifft eine selbstzentrierende Nabe für Taktscheiben von Encodern, Schrittmotoren oder Druckwalzenabtrieben umfassend einen Nabenteller für die Befestigung einer Taktscheibe oder eines Codeträgers und einen geschlitzten Nabenschaft zum Aufstecken auf das Wellenende einer An- oder Abtriebseinheit sowie ein auf den Nabenschaft formschlüssig aufgeschobenes ringförmiges Klemmstück (4).

Aus der DE 19860012A1 (PWB-Ruhlatec Industrieprodukte GmbH) ist eine selbstzentrierende Taktscheibennabe der eingangs genannten Art und ein Verfahren zu ihrer Montage bekannt. Die Selbstzentrierung erfolgt dadurch, dass die Außenwandung des Nabenschaftes zumindest teilweise konusförmig ausgebildet ist, wobei der Konuswinkel vom Schaftende zur Taktscheibenauflagefläche hin ansteigt. Nach dem Aufschieben des Nabenschaftes auf die Motorwelle wird auf der Außenwandung ein Spannelement z.B. in Form eines Ringes auf den Konus aufgeschoben, wodurch sich die Klemmwirkung der geschlitzten Nabe auf die Motorwelle erhöht.

Für die Montage der Taktscheibennabe ist darauf zu achten, dass die Zentrierung auf der Motorwelle automatisch, d.h. selbstzentrierend erfolgen kann. Hierzu hat der Nabenschaft an seinem dem Wellenende bzw. der Motorflanschebene zugewandten Seite eine sogenannte "Fangbohrung". Außerdem benötigt man zur Selbstzentrierung ein gewisses Spiel und eine Führung zwischen der Motorwelle und dem Nabenschaft, damit die Nabe nicht schief auf die Welle aufgedrückt werden kann, sondern in der konusförmig sich erweiternden Fangbohrung zentriert wird.

Die Anwendung von selbstzentrierenden Naben nimmt im gesamten Gebiet der Technik immer stärker zu, so dass inzwischen sehr hohe Stückzahlen erreicht werden. Dabei entsteht insbesondere in der Massenfertigung ein Problem durch die hohen Anforderungen an die Oberflächengüte von Motorwellen und Taktscheibennabe sowie an die Fertigungsgenauigkeit, um die erforderlichen Toleranzen einhalten zu können. Schon eine geringfügige Verschiebung oder Schieflage der Taktscheibe zur Motorwelle genügt, um die Funktion bei Servomotoren, Druckwalzenantrieben oder ähnlichen Anwendungen sensiblen in unzulässigem Ausmaß zu beeinträchtigen und damit die Ausschussquote zu erhöhen.

Aufgabe der vorliegenden Erfindung ist es daher, eine selbstzentrierende Nabe für Taktscheiben von Encodern, Schrittmotoren oder Druckwalzenantrieben mit konischer Klemmung auf Wellen von An- oder Abtriebseinheiten zu entwickeln, die ohne Vorspannung aufgesetzt, selbsttätig justiert und gesichert wird und die selbst bei Toleranzabweichungen und bei geringen Materialansprüchen zentrisch auf jede Welle, insbesondere aber auf encoderseitige Wellenenden aufschiebbar und fixierbar ist. Die Montage soll unter Massenfertigungsbedingungen mit der bei Encodern oder Schrittmotoren erforderlichen Genauigkeit durchführbar sein.

Diese Aufgabe wird erfindungsgemäß durch die in den Ansprüchen angegebenen Merkmale gelöst. Es hat sich gezeigt, dass durch einfache Drehbewegungen des Ritzels oder des Klemmkörpers eine Relativbewegung des Klemmstücks in Nabenachsrichtung erzeugt werden kann, die zu einer konischen Verklemmung zwischen Klemmkörper, Klemmstück und Nabenschaft führt.

Da der Nabenschaft geschlitzt ist, kann er mit nur geringem Anpressdruck, vorzugsweise sogar ohne Druck auf die Motorwelle aufgeschoben werden. Durch die radialsymetrische Ausbildung und koaxialer Anordnung von Nabe, Klemmstück und Klemmkörper erfolgt eine Selbstzentrierung mit hohen Klemmkräften und ein sicherer Klemmsitz, der auch bei extremen Temperaturwechseln einen in ungestörten Betrieb über mehrere Jahre (> 10 Jahre) ermöglicht.

Im folgenden wird ein Ausführungsbeispiel für eine selbstzentrierende Taktscheibe mit konischer Klemmung der Nabe auf der Motorachse dargestellt. Es zeigen:
- Fig. 1: Querschnitt durch eine selbstzentrierende Nabe gemäß vorliegender Erfindung
- Fig. 2: Schematisierter Verfahrensablauf zur Montage der erfindungsgemäßen Taktscheibennabe

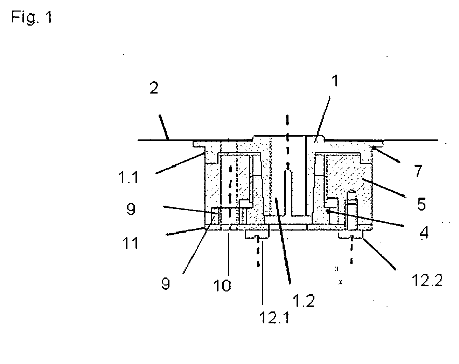

In Fig. 1 ist die Nabe mit 1 bezeichnet, bestehend aus einem Nabenteller 1.1 und einem geschlitzten Nabenschaft 1.2. Auf der Außenseite des Nabentellers 1.1 ist die Taktscheibe 2 über einen Klebering 3 befestigt.

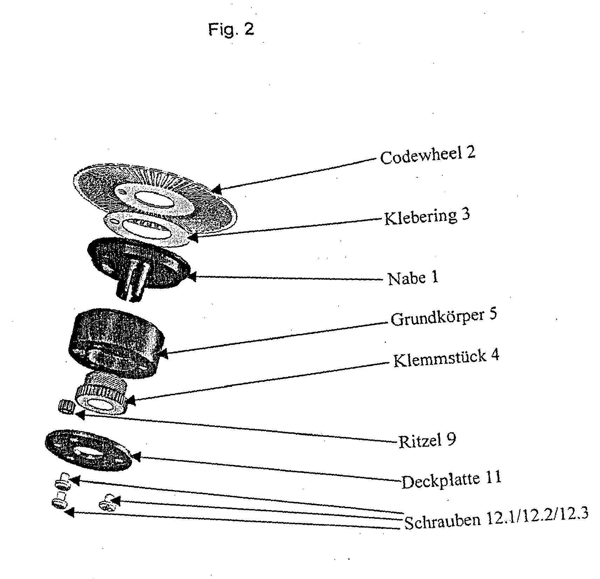

Der Nabenschaft 1.2 trägt einen Außenkonus, auf dem ein ringförmiges Klemmstück 4 formschlüssig aufgeschoben ist. Beim Verschieben des Klemmstücks 4 auf der Nabenachse tritt gleichzeitig eine Selbstzentrierung und eine konische Klemmung in Bezug auf das Wellenende ein, das gemäß Fig. 2 in die Bohrung der Nabe eingeschoben werden kann.

Zur axialen Verschiebung des Klemmstücks 4 ist an dem der Taktscheibe abgewandten Nabentellerseite ein ringförmig ausgebildeter Klemmkörper 5 über das Klemmstück 4 geschoben, wobei die zentrische Lagerung in Bezug auf die Nabenachse 6 an einem umlaufenden Nabentellerrand 7 erfolgt. Zwischen Klemmstück 4 und Klemmkörper 5 befindet sich eine form- und kraftschlüssige Transfereinheit 8, beispielsweise in Form einer Schrägverzahnung oder einer Verschraubung. Diese ermöglicht über eine Relativbewegung zwischen Klemmstück 4 und Klemmkörper 5 einen axialen Vorschub des Klemmstücks 4 in Richtung des ansteigenden Konuswinkels, so dass eine konische Klemmung bzw. ein Klemmsitz bei gleichzeitig konzentrisch wirkender Selbstzentrierung auf der Motorachse eintritt.

Die Relativbewegung zwischen Klemmstück 4 und Klemmkörper 5 wird vorzugsweise gemäß Fig. 1 über ein Ritzel 9 eingeleitet, das drehbar auf einer mit dem Klemmkörper 5 verbundenen Achse 10 angeordnet ist. Gemäß Fig. 1 wird die starre Verbindung zwischen Klemmkörper 5 und Ritzelachse 10 über eine Deckplatte 11 erreicht, die einen Abschluss des ringförmigen Klemmkörpers 5 auf der dem Nabenteller 1.1 abgewandten Seite bildet. Im Beispiel nach Fig. 1 ist die Deckplatte 11 mittels Maschinenschrauben 12.1, 12.2 und 12.3 fest mit dem Klemmkörper 5 verschraubt.

Mit dem Ritzel 9 kämmt eine Außenverzahnung 4.1. des Klemmstückes 4, so dass bei einer Drehbewegung des Ritzels 9 um die Ritzelachse 10 das Klemmstück 4 ebenfalls in Drehung versetzt wird und dabei wegen der formschlüssigen Verbindung z. B. durch ein Gewinde die Transfereinheit 8 bzw. die Schrägverzahnung zur Herbeiführung einer konischen Verklemmung mit der Motorwelle auf dem Nabenschaft 1.2 bewegt wird.

Die Montage der selbstzentrierenden Nabe und die Erreichung der konischen Klemmung wird nachfolgend eingehender beschrieben.

Dabei wird davon ausgegangen, dass ein Wellenende auf der Taktscheibenseite des Nabentellers in die Bohrung der Nabe eingeführt wird. Die erfindungsgemäße Nabe 1 ist bereits vormontiert, wobei jedoch der form- und kraftschlüssige Kontakt zwischen Klemmstück (4) und Nabenschaft 1.2 mit Spiel oder mit geringster konischer Klemmung eingestellt ist.

Die Vormontage erfolgt dadurch, dass der Klemmkörper 5 auf den Nabenteller 1.1 aufgesteckt wird und dann das Klemmstück 4 zwischen Klemmkörper 5 und Außenwand des Nabenschaftes 1.2 lose eingeschraubt wird.

Gleichzeitig kann das Ritzel 9 mit dem Klemmkörper 5 verbunden werden, wobei auf eine spielfreie Verzahnung zwischen Ritzel 9 und Klemmstück 4 zu achten ist. Nun wird als Abschluss die Deckplatte 11 über Maschinenschrauben 12.1, 12.2, 12.3 mit dem Klemmkörper 5 verschraubt.

Beim Einschieben des Wellenendes entlang der Nabenachse 6 treten nur geringe Druckkräfte auf. Erst wenn die endgültige Position der selbstzentrierende Nabe auf der Motorwelle erreicht ist, wird durch Drehung des Ritzels 9 auf der Ritzelachse 10 die konische Klemmung auf der Motorachse verstärkt und damit ein sicherer Halt für die selbstzentrierende Nabe erreicht.

## Patentansprüche

1. Selbstzentrierende Nabe für Taktscheiben von Encodern, Schrittmotoren oder Druckwalzenantriebe, umfassend einen Nabenteller zur Befestigung einer Taktscheibe oder eines Codeträgers und einen geschlitzten Nabenschaft zum Aufstecken auf das Wellenende einer Antriebs- oder Abtriebseinheit sowie ein auf den Nabenschaft (1, 2) formschlüssig aufgeschobenes, ringförmiges Klemmstück (4), **dadurch gekennzeichnet, dass** das Klemmstück (4) in einem ringförmigen Klemmkörper (5) angeordnet ist, wobei Klemmstück (4) und Klemmkörper (5) form- und/oder kraftschlüssig derart verbunden sind, dass bei einer Drehung des Klemmkörpers (5) oder des Klemmstücks (4) eine Verschiebung parallel zur Nabenachse erfolgt und wobei auf dem Klemmkörper (5) eine Deckplatte (11) befestigt ist, auf der ein Ritzel (9) drehbar gelagert ist, das in eine Außenverzahnung des Klemmstücks (4) eingreift und bei einer Relativbewegung entlang der Nabenachse (6) zwischen Nabe (1) und Klemmstück (4) über eine radial nach innen gerichtete Kraft im Bereich des geschlitzten Nabenschafts (1, 2) ein Klemmsitz ausgebildet ist.

2. Selbstzentrierende Nabe nach einem der vorhergehenden Ansprüche, **dadurch gekennzeichnet, dass** zwischen Klemmstück (4) und Klemmkörper (5) ein Gewinde derart ausgebildet ist, dass bei einer über das Ritzel (9) eingeleiteten Drehung des Klemmstücks (4) eine Relativverschiebung in Nabenachsrichtung zwischen dem Klemmstück (4) und dem Klemmkörper (5) und damit eine Flächenpressung im Bereich des geschlitzten Nabenschafts (1, 2) erfolgt.

3. Selbstzentrierende Nabe nach einem der vorhergehenden Ansprüche, **dadurch gekennzeichnet, dass** die Kontaktfläche zwischen Nabenschaft (1, 2) und Klemmstück (4) konisch ausgebildet ist, so dass bei einer Verschiebung des Klemmstücks (4) auf der Nabenachse (6) ein radialer Druck auf den Nabenschaft (1, 2) ausgeübt wird und damit eine konische Klemmung des Nabenschaftes auf den Wellenende erfolgt.
